# FASCICULE DE BREVET EUROPEEN

(11) **EP 3 194 270 B1**
(45) Date de publication et mention de la délivrance du brevet: **29.08.2018**
(21) Numéro de dépôt: 15766923.5
(22) Date de dépôt: 04.09.2015
(51) Int. Cl.: B64D 13/06

(54) **SYSTEME DE CONDITIONNEMENT D'AIR POUR AVION"PLUS ELECTRIQUE"**
KLIMAANLAGE FÜR EIN "MEHR ELEKTRISCHES FLUGZEUG"
AIR CONDITIONING SYSTEM FOR A "MORE ELECTRIC" AIRPLANE

(30) Priorité: 05.09.2014 FR 1458359
(43) Date de publication de la demande: 26.07.2017
(73) Titulaire: Liebherr-Aerospace Toulouse SAS, 31200 Toulouse (FR)
(72) Inventeur: GALZIN, Guillaume, F-31200 Toulouse (FR); GOMEZ, Vincent, F-31620 Cepet (FR)
(74) Mandataire: Cabinet Plasseraud
(86) Numéro de dépôt international: PCT/FR2015/052358
(87) Numéro de publication internationale: WO 2016/034830

(56) Documents cités:
- EP-A2- 2 592 001
- US-A1- 2007 113 579
- US-B2- 7 797 962

## Description

### Domaine Technique

La présente invention se rapporte de manière générale à un système de conditionnement d'air.

L'invention trouve des applications, en particulier, dans le domaine de l'aéronautique. Elle concerne plus particulièrement le contexte de l'avion « plus électrique ».

### Art Antérieur

Les avions commercialisés de nos jours comprennent trois sources d'énergies secondaires générées à partir de la combustion de l'énergie primaire, c'est-à-dire le kérosène. Ces énergies secondaires sont l'énergie hydraulique, l'énergie pneumatique et l'énergie électrique. Elles sont utilisées pour alimenter diverses charges à bord de l'avion.

Les recherches actuelles tendent à substituer à ces trois sources d'énergie secondaire une seule source d'énergie électrique. On parle alors d'avion « plus électrique ».

Cependant, avec le passage à l'avion « plus électrique », certains systèmes doivent être modifiés pour s'adapter à la disparition de l'énergie hydraulique et/ou pneumatique. C'est le cas du système de conditionnement d'air qui utilise actuellement de l'énergie pneumatique en prélevant de l'air compressé directement dans les moteurs thermiques de propulsion de l'avion. Le système de conditionnement d'air a plusieurs fonctions : assurer un certain débit d'air neuf dans la zone pressurisée (pour assurer un taux de renouvellement du dioxygène suffisant pour les occupants et une quantité d'air suffisante pour le système de pressurisation), assécher l'air envoyé à la zone pressurisée et assurer les fonctions de climatisation et de chauffage.

Des solutions existent déjà pour adapter le système de conditionnement d'air au contexte de l'avion « plus électrique ». Une première solution présente un système de conditionnement d'air qui est actuellement embarqué sur le dernier né des avions gros porteurs d'un constructeur nord-américain, comprenant une première partie de prélèvement et de compression de l'air extérieur et une seconde partie de conditionnement de l'air prélevé. La partie de prélèvement et de compression se compose de quatre moto-compresseurs et la partie de conditionnement se compose de deux packs chacun comprenant un turbocompresseur. Cette première solution comprend donc six machines tournantes.

Une seconde solution, décrite dans le brevet US 7,797,962, est composée de deux packs assurant à la fois le prélèvement de l'air extérieur, sa compression et son conditionnement, et comprenant chacun un moto-compresseur et un turbocompresseur motorisé. Cette seconde solution comprend alors quatre machines tournantes.

Or, les machines tournantes sont lourdes et encombrantes. De plus, elles sont généralement chères, et nécessitent d'être pilotées par des électroniques de puissance complexes. Leur nombre important complexifie l'architecture ce qui engendre des coûts indirects de développement et de maintenance.

### Résumé de l'Invention

L'invention vise à atténuer tout ou partie des inconvénients de l'art antérieur précités.

La présente invention a pour but de proposer une nouvelle architecture de système de conditionnement d'air consommant uniquement de l'énergie électrique comme énergie secondaire générée à bord d'un aéronef.

La présente invention vise notamment à réduire le nombre de machines tournantes utilisées afin de diminuer la complexité, le poids, l'encombrement et le coût du système.

A cet effet, un premier aspect de l'invention propose un système de conditionnement d'air pour aéronef alimenté uniquement par énergie électrique, adapté pour prélever de l'air extérieur à l'aéronef et pour délivrer de l'air conditionné à l'intérieur de l'aéronef. Le système de conditionnement d'air comprend au plus trois machines tournantes motorisées qui se composent de :
- un premier et un second turbocompresseurs motorisés indépendants l'un de l'autre, chaque turbocompresseur motorisé étant formé d'un compresseur générant un flux d'air à respirer à partir de l'air extérieur, d'une turbine et d'un moteur électrique ; et
- un moto-compresseur interconnecté entre les turbocompresseurs motorisés via une conduite d'interconnexion et formé d'un compresseur et d'un moteur électrique, la conduite d'interconnexion étant prévue pour relier les compresseurs des turbocompresseurs motorisés avec le compresseur du moto-compresseur, et dans lequel le moto-compresseur est agencé pour :
   - à partir de l'air extérieur prélevé, générer un flux d'air primaire, qui entraine un flux d'air secondaire prélevé de l'extérieur, permettant le refroidissement d'un flux d'air à respirer, prévu pour délivrer l'air conditionné, dans une première phase de fonctionnement, correspondant à une phase de fonctionnement au sol ou à relativement faible altitude et à relativement faible vitesse de l'aéronef ;
   - être à l'arrêt ou au ralenti dans une deuxième phase de fonctionnement à relativement faible altitude et à relativement grande vitesse de l'aéronef ; et,
   - fournir un complément de débit d'air à respirer dans une troisième phase de fonctionnement à relativement haute altitude et à relativement grande vitesse de l'aéronef, de sorte à compenser une plus faible densité de l'air extérieur prélevé.

Un tel système de conditionnement d'air comportant seulement trois machines tournantes motorisées, c'est-à-dire deux turbocompresseurs motorisés et un moto-compresseur, est particulièrement bien adapté pour le prélèvement, la pressurisation et le conditionnement de l'air extérieur et apporte au système, directement, une importante économie de poids, d'encombrement et de coût. Le système de conditionnement d'air présente également une architecture simplifiée. De plus, un tel système de conditionnement d'air n'est alors alimenté électriquement que par trois canaux d'alimentation seulement, chacun alimentant l'une des machines tournantes respectives. Ainsi, le fait de réduire le nombre de machines tournantes et de canaux électriques permet indirectement d'encore diminuer la complexité, l'encombrement, la masse et le coût du système électrique et par conséquent de potentiellement réduire la consommation de carburant globale de l'avion.

Avantageusement, le moto-compresseur possède deux fonctions distinctes mais complémentaires, utilisées alternativement selon les différentes phases de fonctionnement de l'avion. En outre, plusieurs configurations du système peuvent être mises en place pour introduire de la redondance, afin de remédier à d'éventuelles pannes de ce moto-compresseur.

Le système ainsi proposé permet de supprimer un moto-compresseur par rapport à des systèmes de l'art antérieur tout en améliorant la rentabilité énergétique du système de conditionnement d'air sans rien sacrifier à son efficacité ni à sa robustesse par rapport à d'éventuelles pannes.

Dans un souci d'optimisation de l'invention, la conduite d'interconnexion peut en outre être adaptée pour, dans la troisième phase de fonctionnement, compléter à parts sensiblement égales le débit de l'air compressé respectivement fourni par le compresseur de chaque turbocompresseur motorisé, à partir de l'air compressé par le moto-compresseur.

Dans un mode de réalisation avantageux, la conduite d'interconnexion comprend au moins deux vannes d'isolement positionnées chacune entre le moto-compresseur et l'un respectif des turbocompresseurs motorisés, lesdites vannes d'isolement étant adaptées pour permettre l'équilibrage du système dans un mode de fonctionnement nominal et sa reconfiguration dans un mode de fonctionnement dégradé en cas de panne.

Ainsi, la fermeture des vannes d'isolement, dans la troisième phase, permet d'isoler un des turbocompresseurs motorisés ou le moto-compresseur en cas de panne de l'une de ces machines. Les vannes d'isolement permettent donc, de manière avantageuse, de contrôler le débit d'air fourni par le moto-compresseur et également de maintenir le système fonctionnel en cas de panne d'une machine tournante.

Dans certains modes de réalisation, le système de conditionnement d'air comprend en outre au moins un plenum d'entrée adapté pour fournir de l'air extérieur aux compresseurs des machines tournantes motorisées à partir d'au moins une entrée Ramair. Avoir une entrée d'air centralisée permet à la fois de simplifier et d'équilibrer le système de conditionnement d'air.

Une forme de réalisation prévoit que le système de conditionnement d'air comprend :
- au moins un premier et un second organes déprimogènes associés chacun à l'un respectif des turbocompresseurs motorisés et comprenant chacun un dispositif d'injection d'air alimenté en air par le moto-compresseur dans la première phase de fonctionnement ;
- au moins un premier et un second échangeurs de chaleur, associés chacun à l'un respectif des turbocompresseurs motorisés et à l'un respectif des organes déprimogènes, chaque échangeur de chaleur étant adapté pour refroidir l'air à respirer le traversant à l'aide d'un flux d'air secondaire généré par l'organe deprimogène associé.

En outre, chaque organe déprimogène est adapté pour ventiler le turbocompresseur motorisé respectif et dans lequel au moins l'un des organes déprimogènes est adapté pour, en outre, ventiler le moto-compresseur.

De ce fait, le moto-compresseur associé aux deux organes déprimogènes permet avantageusement de créer un flux d'air secondaire permettant de refroidir l'air à respirer envoyé dans la zone pressurisée, dans la première phase.

Avantageusement, le système de conditionnement d'air peut également comprendre, en outre, au moins quatre vannes de ventilation adaptées pour réguler la ventilation du système à travers les organes déprimogènes, une première vanne de ventilation étant positionnée pour réaliser une connexion entre le premier organe déprimogène et le premier turbocompresseur motorisé, une deuxième vanne de ventilation étant positionnée pour réaliser une connexion entre le premier organe déprimogène et le moto-compresseur, une troisième vanne de ventilation étant positionnée pour réaliser une connexion entre un second organe déprimogène et le second turbocompresseur motorisé et une quatrième vanne de ventilation étant positionnée pour réaliser une connexion entre le second organe déprimogène et le moto-compresseur.

En conséquence, la fermeture et/ou l'ouverture des vannes de ventilation permet d'isoler le moto-compresseur en cas de panne de ce dernier et ainsi de créer une redondance d'équipements en utilisant l'air fourni par les compresseurs des turbocompresseurs motorisés pour alimenter les organes déprimogènes.

Dans un souci de confort, le système de conditionnement d'air peut comprendre au moins un premier et un second dispositifs d'assèchement de l'air, chacun étant associé à l'un respectif des turbocompresseurs motorisés ainsi qu'à l'un respectif des échangeurs. Le dispositif d'assèchement permet de déshumidifier l'air avant de l'envoyer en zone pressurisée.

Afin d'économiser de l'énergie, le système de conditionnement d'air peut comprendre, en outre, au moins une première et une seconde vannes d'altitude, chacune permettant d'éviter l'un respectif des dispositifs d'assèchement ainsi que la turbine du turbocompresseur motorisé associée audit dispositif d'assèchement. En effet, lorsque l'air extérieur n'est pas humide, il n'est alors pas nécessaire de l'assécher. Ceci est le cas, par exemple pour un fonctionnement du système lors d'une phase de vol à haute altitude.

Un tel système de conditionnement d'air peut être tel que son alimentation électrique soit fournie par un réseau d'alimentation électrique comportant un canal d'alimentation électrique pour chaque machine tournante motorisée. Chaque canal d'alimentation est alors connecté à une des machines tournantes. On a donc trois réseaux d'alimentation électrique seulement, au lieu de quatre dans l'art antérieur.

### Brève Description des Dessins

D'autres caractéristiques et avantages de l'invention apparaîtront encore à la lecture de la description qui va suivre. Celle-ci est purement illustrative et doit être lue en regard des dessins annexés dans lesquels :
- la figure 1 est un diagramme fonctionnel représentant un système de conditionnement d'air selon des formes de réalisation de l'invention ;
- la figure 2 est un diagramme fonctionnel représentant un système de conditionnement d'air, dans une première phase de fonctionnement, selon une forme de réalisation de l'invention ;
- la figure 3 est un diagramme fonctionnel représentant un système de conditionnement d'air, dans une deuxième phase de fonctionnement, selon une forme de réalisation de l'invention ;
- la figure 4 est un diagramme fonctionnel représentant un système de conditionnement d'air, dans une troisième phase de fonctionnement, selon une forme de réalisation de l'invention.

### Description détaillée de modes de réalisation

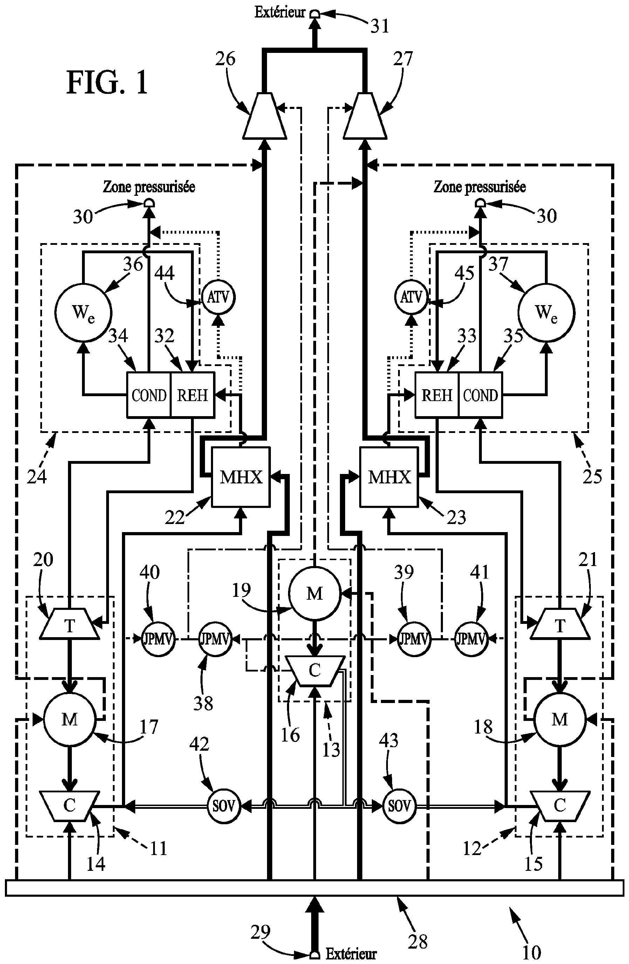

La **Figure 1** illustre la structure générale d'une forme de réalisation d'un système de conditionnement d'air 10 selon des modes de réalisation de la présente invention.

Le système de conditionnement d'air 10 a pour fonctions d'assurer un certain débit d'air dans la zone pressurisée (avec un certain taux de renouvellement de dioxygène), de pressuriser la zone pressurisée, éventuellement d'assécher l'air envoyé à la zone pressurisée et, en outre, d'assurer les fonctions de chauffage et de climatisation. L'air envoyé dans la zone pressurisée peut être constitué pour partie par de l'air fourni par le système 10, dit air à respirer, et pour partie par de l'air de recirculation, c'est-à-dire de l'air prélevé dans la zone pressurisée, qui est filtré avant d'y être réinjecté.

Le système 10 peut être embarqué à bord d'un avion «plus électrique ».

Dans une telle application, le système 10 comprend par exemple deux packs de prélèvement et de conditionnement d'air. Un premier pack comprend un turbocompresseur motorisé 11 et un second pack comprend un autre turbocompresseur motorisé 12. De plus un unique moto-compresseur 13 est associé aux deux turbocompresseurs motorisés via une conduite d'interconnexion (représentée sur les figures par un trait plein doublé). Le système de conditionnement d'air 10 comprend alors trois machines tournantes motorisées.

Dans l'exemple représenté à la Figure 1, le turbocompresseur motorisé 11 comprend un compresseur 14, un moteur 17 électrique et une turbine 20 ; de même le turbocompresseur motorisé 12 comprend un compresseur 15, un moteur 18 électrique et une turbine 21 ; enfin, le moto-compresseur 13 comprend un compresseur 16 et un moteur 19 électrique.

Un compresseur consomme de l'énergie pour comprimer de l'air ; au contraire une turbine détend de l'air en fournissant de l'énergie. Ainsi les compresseurs 14, 15 consomment de l'énergie électrique transformée en énergie mécanique par les moteurs 17, 18 respectivement, ainsi que de l'énergie pneumatique transformée en énergie mécanique par les turbines 20, 21 respectivement. Le compresseur 16 consomme, quant-à-lui, seulement de l'énergie électrique transformée en énergie mécanique par le moteur 19.

Dans cet exemple, le premier pack comprend en outre un échangeur de chaleur 22, un dispositif d'assèchement 24 et un organe déprimogène 26. Similairement, le second pack comprend un échangeur de chaleur 23, un dispositif d'assèchement 25 et un organe déprimogène 27.

Le système de conditionnement d'air 10 prélève de l'air extérieur (représenté sur les figures par une flèche pleine en gras), de préférence, via une entrée Ramair 29 associée à un plénum 28 d'entrée centralisé. L'air prélevé est alors distribué par le plenum 28 entre les différents composants dudit système 10 en fonction des besoins. Dans une variante de réalisation, le prélèvement de l'air extérieur pourrait se faire à l'aide de plusieurs entrées, par exemple une entrée pour chaque composant utilisant cet air.

L'air prélevé est ensuite distribué aux deux packs, préférentiellement de manière égale. Dans la suite de la description, seulement le fonctionnement du premier pack sera décrit mais le fonctionnement du second pack est identique à celui du premier pack.

Une fois l'air extérieur pressurisé par les deux packs, ce dernier est injecté dans la zone pressurisée de l'avion via une sortie interne 30. Une partie de l'air extérieur prélevé qui n'est pas pressurisé, est lui rejeté à l'extérieur de l'avion via une sortie externe 31. La sortie externe 31 est, dans cet exemple, une sortie Ramair.

Sur un profil de vol d'avion type, le système de conditionnement d'air décrit présente trois phases distinctes. Une première phase de fonctionnement, dite phase au sol, est une phase de fonctionnement au sol ou à relativement faible altitude et à relativement faible vitesse. Une deuxième phase de fonctionnement est une phase de vol à relativement faible altitude et à relativement grande vitesse. La deuxième phase de fonctionnement peut donc être identifiée aux phases de début de montée ou de fin de descente de l'avion ainsi qu'aux phases d'attente et d'approche de l'avion qui précèdent l'atterrissage. Enfin, une troisième phase de fonctionnement, dite phase de croisière, est une phase de vol à relativement haute altitude et à relativement grande vitesse. La troisième phase de fonctionnement peut donc être identifiée aux phases de fin de montée ou de début de descente de l'avion ainsi qu'à la phase de vol en croisière.

L'altitude correspondant à la transition entre la deuxième phase et la troisième phase ainsi que la vitesse correspondant à la transition entre la première phase et la deuxième phase dépendent du dimensionnement des packs, et plus précisément du dimensionnement des compresseurs, ainsi que des caractéristiques de l'avion. En particulier, la vitesse de l'avion peut être considérée comme grande vitesse lorsque cette vitesse est suffisante pour une auto-ventilation du système, c'est-à-dire pour entrainer le flux d'air secondaire. L'invention n'est pas limitée par la valeur de l'altitude et de la vitesse.

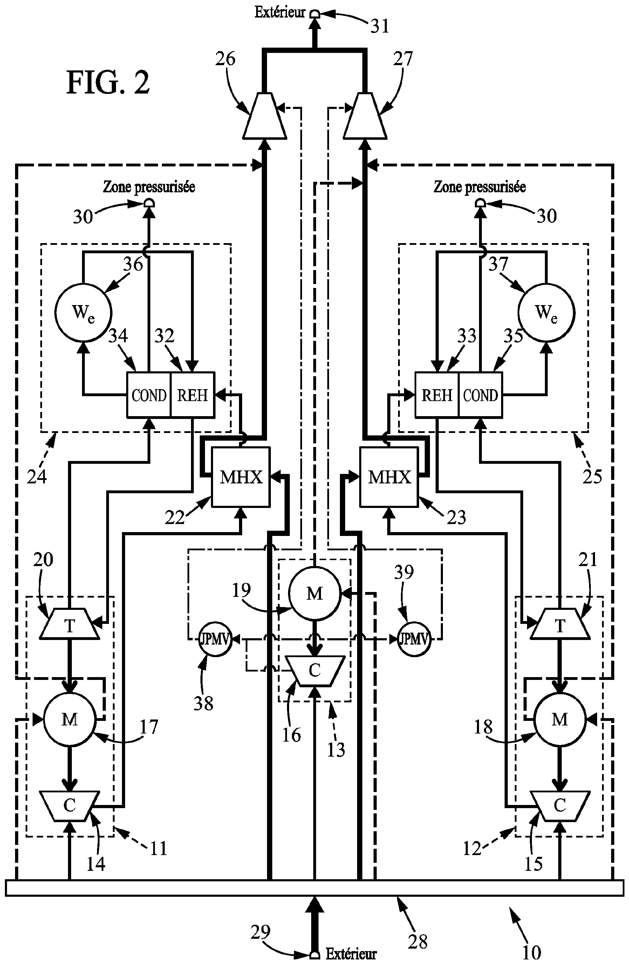

En référence à la **Figure 2**, le système de conditionnement d'air 10 est tout d'abord représenté dans la première phase au sol.

Le flux d'air à respirer (représenté sur les figures par un trait plein fin), qui est l'air injecté dans la zone pressurisée, est donc prélevé à l'extérieur de l'avion via l'entrée Ramair 29 et distribué via le plenum 28 au premier pack et en parallèle au second pack. Le compresseur 14 du turbocompresseur motorisé 11 comprime alors ce flux d'air à respirer. Cela a pour conséquence d'augmenter la pression et la température de l'air le traversant, l'augmentation de la température étant directement liée à l'augmentation de la pression de l'air.

Le flux d'air à respirer est ensuite refroidi en traversant l'échangeur 22. Il est alors déshumidifié en traversant le dispositif d'assèchement 24 formant une boucle de séparation d'eau. Ce dernier comprend par exemple un réchauffeur 32, un condenseur 34 et un extracteur d'eau 36. Similairement, le dispositif d'assèchement 25 du second pack comprend un réchauffeur 33, un condenseur 35 et un extracteur d'eau 37.

Enfin, le flux d'air à respirer passe dans la turbine 20 du turbocompresseur motorisé 11 afin d'être détendu avant de repasser dans le condenseur 34 du dispositif d'assèchement 24 pour être injecté dans la zone pressurisée via la sortie interne 30.

Ainsi, dans la phase de fonctionnement au sol, les deux turbocompresseurs motorisés 11, 12 assurent chacun, par exemple environ la moitié du débit d'air à respirer total fourni en zone pressurisée.

L'échangeur 22 a donc pour but de refroidir cet air avant qu'il ne soit injecté dans la zone pressurisée. Pour ce faire le flux d'air secondaire (représenté sur les figures par un trait plein épais), ayant une température plus froide que celle de l'air à respirer, peut échanger par conduction avec le flux d'air à respirer dans l'échangeur. Le flux d'air à respirer est alors refroidi pendant que le flux d'air secondaire est réchauffé.

Le flux d'air secondaire provient de l'extérieur de l'avion, via l'entrée Ramair 29, et est rejeté à l'extérieur de l'avion, via la sortie externe 31, après avoir traversé l'échangeur 22 pour évacuer la chaleur.

Afin de créer le flux d'air secondaire traversant l'échangeur 22, l'organe déprimogène 26 est positionné entre la sortie de l'échangeur 22 et la sortie externe 31. Dans cet exemple de réalisation de l'invention, l'organe déprimogène 26 est une trompe. Similairement l'organe déprimogène 27 du second pack peut également être une trompe. Cependant dans un autre exemple de réalisation, les organes déprimogènes 26, 27 pourraient être des ventilations comme par exemple des ventilateurs électriques.

La fonction de l'organe déprimogène 26 est de créer une dépression pour entraîner l'air en amont dudit organe et ainsi créer le mouvement du flux d'air secondaire à partir du plénum 28 vers la sortie externe 31. Pour créer la dépression dans le cadre d'un organe déprimogène de type trompe, de l'air ayant une pression plus élevée que l'air à entraîner correspondant à l'air primaire peut être injecté, via un injecteur, dans l'organe déprimogène 26 vers la sortie externe 31.

Dans la première phase, le moto-compresseur 13 fournit, à partir de l'air extérieur, de l'air compressé à l'injecteur. En effet, le compresseur 16 comprime l'air distribué par le plenum 28 et via une vanne de ventilation 38 fournit un flux d'air primaire (représenté sur les figures par un trait pointillé tiret-point) à l'injecteur. Similairement, le compresseur 16 fournit de l'air à l'injecteur de l'organe déprimogène 25 du second pack via une vanne de ventilation 39.

En outre, dans la phase au sol, le compresseur 16 consomme l'énergie électrique transformée en énergie mécanique par le moteur électrique 19 associé. L'énergie consommée par le compresseur 14 est, pour partie, de l'énergie électrique transformée en énergie mécanique par le moteur 17 associé et, pour partie, de l'énergie pneumatique transformée en énergie mécanique par la turbine 20 associée.

Les moteurs électriques ont besoin d'être refroidis. Pour cela, un flux d'air de ventilation (représenté sur les figures par un trait pointillé gras) traverse les trois moteurs 17, 18, 19. Ce flux d'air de ventilation provient de l'extérieur de l'avion, par exemple via le plenum 28, et est rejeté à l'extérieur de l'avion, par exemple via la sortie externe 31. Le flux d'air de ventilation peut être entraîné, lors de la phase au sol, de la même manière que le flux d'air secondaire, c'est-à-dire par les organes déprimogènes 26, 27.

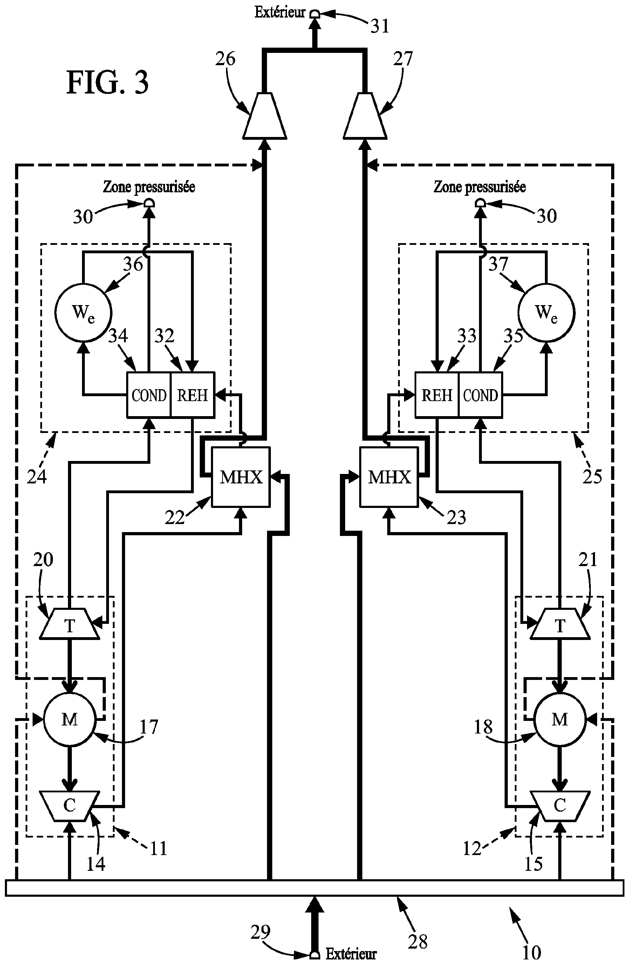

En référence à la **Figure 3**, le système de conditionnement d'air 10 est représenté dans la deuxième phase de fonctionnement de l'avion entre le fonctionnement au sol et le fonctionnement en vol à haute altitude.

Dans cette deuxième phase, le fonctionnement du système de conditionnement d'air 10 reste globalement le même que dans la première phase.

Cependant, dans la deuxième phase, l'avion se déplace à plus grande vitesse que dans la première phase. Ainsi, le flux d'air secondaire n'a plus besoin d'être entraîné par les organes déprimogène 36, 37. Il en va de même pour le flux d'air de ventilation. En effet, l'air est entraîné grâce à la pression dynamique Ramair générée par la vitesse de l'avion. Les vannes de ventilation 38, 39, 40, 41 sont fermées et il n'y a donc plus de flux d'air primaire fourni par le moto-compresseur 13.

Ainsi dans cette deuxième phase, le moto-compresseur 13 peut fonctionner à un régime ralenti ou même être arrêté afin d'économiser l'énergie électrique disponible à bord de l'avion.

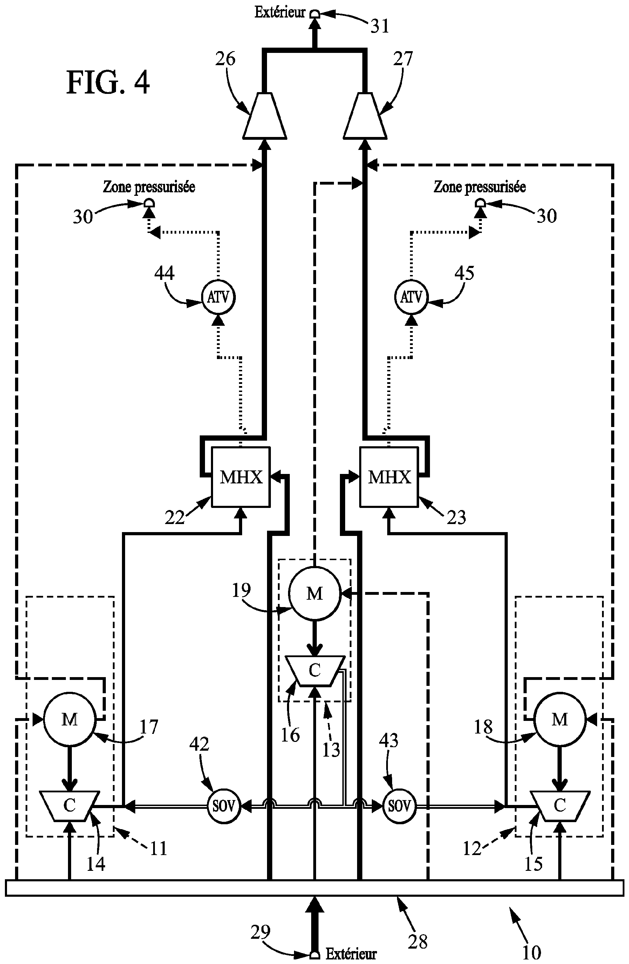

En référence à la **Figure 4**, le système de conditionnement d'air 10 est représenté dans la troisième phase de croisière, ou phase de vol à haute altitude.

Dans la phase de croisière l'avion se déplace à grande vitesse comme dans la deuxième phase. Ainsi le flux d'air secondaire et le flux d'air de ventilation n'ont pas non plus besoin d'être entraînés par les organes déprimogènes 36, 37.

En outre dans la phase de croisière, l'air extérieur a une plus faible pression et une plus faible température par rapport à celles de l'air extérieur des autres phases.

L'air extérieur à haute altitude est également sec, il n'est donc pas nécessaire de l'assécher à travers les dispositifs d'assèchement 24, 25.

Ainsi dans la phase de croisière, une vanne d'altitude 44 qui est positionnée entre la sortie de l'échangeur 22 et la sortie interne 30 peut être ouverte afin de permettre au flux d'air à respirer d'être directement injecté dans la zone pressurisée sans traverser le dispositif d'assèchement 24 et la turbine 20, via une conduite d'altitude (représenté sur les figures par un trait formé de points). Similairement pour le second pack, une vanne d'altitude 45 qui est positionnée entre la sortie de l'échangeur 23 et la sortie interne 30 peut être ouverte afin de dévier le flux d'air à respirer et de lui permettre d'être directement injecté dans la zone pressurisée sans traverser le dispositif d'assèchement 25 et la turbine 21. Lors de la phase au sol et de la deuxième phase, ces vannes d'altitude 44, 45 sont généralement fermées.

Dans la phase de croisière, les turbines 20, 21 qui ne fonctionnent plus ne fournissent donc pas d'énergie aux compresseurs 14, 15 respectivement associés. Les moteurs 17, 18 fournissent alors aux compresseurs 14, 15 respectivement associés toute l'énergie nécessaire.

Compte tenu des propriétés de l'air en altitude et des capacités de débit volumétrique des compresseurs, le débit total fourni dans la zone pressurisé doit être partagé sur les trois compresseurs 14, 15, 16. Pour ce faire, le moto-compresseur 13, qui à partir de la deuxième phase ne fournit plus le flux d'air primaire, est alors utilisé pour compléter les débits d'air à injecter dans la zone pressurisée de chaque turbocompresseur motorisé 11, 12. Cela permet donc de faire l'appoint du débit d'air injecté dans la zone pressurisée et ainsi de compenser la plus faible densité de l'air extérieur.

Ainsi, une vanne d'isolement 42 positionnée entre la sortie d'air du compresseur 14 et celle du compresseur 16, est ouverte afin de permettre au moto-compresseur 13 de fournir de l'air en entrée de l'échangeur 22. Similairement pour le second pack, une vanne d'isolement 43 positionnée entre le flux d'air compressé sortant du compresseur 15 et celui sortant du compresseur 16, est ouverte afin de permettre au moto-compresseur 13 de fournir de l'air en entrée de l'échangeur 23. Lors de la phase au sol et de la deuxième phase, ces vannes d'isolement 42, 43 sont fermées.

Le moto-compresseur 13 est donc relié via la conduite d'interconnexion aux deux turbocompresseurs motorisés 11, 12. De préférence, l'air fourni par le compresseur 16 est partagé de manière égale entre le premier pack et le second pack. Les trois compresseurs 14, 15, 16 fournissent préférentiellement chacun un tiers du débit d'air total.

En outre, les vannes d'isolement 42, 43 ont une fonction d'équilibrage puisqu'elles permettent également d'équilibrer le débit d'air fourni par les deux packs.

Le système de conditionnement d'air 10 peut en outre comprendre plusieurs dispositifs permettant, en cas de panne d'un des composants ou d'un des packs du système, c'est-à-dire lorsque le système n'est plus en mode de fonctionnement nominal mais en mode de fonctionnement dégradé, de le reconfigurer afin de lui permettre de fonctionner malgré la ou les pannes.

Par exemple dans la première phase de fonctionnement, en cas de panne du moto-compresseur 13 ou encore en cas de rupture de la conduite d'interconnexion, la vanne de ventilation 38 peut être fermée pour isoler le moto-compresseur 13 des deux packs. Une autre vanne de ventilation 40 positionnée entre le compresseur 14 du turbocompresseur motorisé 11 et l'organe déprimogène 26 est ouverte afin que ledit compresseur 14 fournisse le flux d'air primaire audit organe. Ainsi une partie du flux d'air à respirer est déviée vers l'organe déprimogène 26 avant d'atteindre l'échangeur 22. Similairement, une vanne de ventilation 41 est positionnée entre le compresseur 15 du turbocompresseur motorisé 12 et l'organe déprimogène 27.

Si cette même panne du moto-compresseur 13 ou de la conduite d'interconnexion survient dans la phase de croisière, alors seuls les deux turbocompresseurs motorisés fournissent l'air à respirer dans la zone pressurisée. Le débit d'air injecté dans la zone pressurisée est donc réduit mais reste acceptable du point de vue de la sécurité de l'avion et de ses occupants.

En cas de panne d'un des packs, les vannes d'isolement 42, 43 peuvent être fermées, indépendamment l'une de l'autre, afin d'isoler le pack défectueux. Le fonctionnement du système reste le même dans la première et la deuxième phases. Lors de la troisième phase, le pack fonctionnel est alors suralimenté par tout le débit d'air provenant du moto-compresseur. Le débit dans la zone pressurisée est également réduit, quel que soit la phase de vol de l'avion, mais reste acceptable.

Enfin, en cas de panne d'un des turbocompresseurs motorisés 11, 12, ce dernier est isolé à l'aide des vannes d'isolement 42, 43. Le système peut alors fonctionner comme lors d'une panne d'un pack en se servant du turbocompresseur motorisé restant et du moto-compresseur. Une solution différente lors de la phase de croisière, peut consister à shunter le turbocompresseur motorisé défectueux en l'isolant par un clapet positionné en sortie de son compresseur et à diriger le débit d'air, fourni par le moto-compresseur, dans l'échangeur du pack dudit turbocompresseur afin de profiter de la capacité d'air froid des deux packs.

La présente invention permet ainsi d'assurer le bon fonctionnement d'un système de conditionnement d'air tout en réduisant le nombre de machines tournantes et en prévoyant des redondances suffisantes afin de garantir le fonctionnement dudit système, et en garantissant un niveau et une qualité suffisants de distribution d'air. Le fait de réduire le nombre de machines tournantes entraîne irrémédiablement une diminution des coûts et de la complexité du système et permet d'optimiser toute l'architecture du système de conditionnement d'air. L'architecture d'un tel système est alors simplifiée. Le système présente une meilleure fiabilité et une diminution de la maintenance nécessaire tout en garantissant le même niveau de disponibilité d'air traité.

Le système de conditionnement 10 à trois machines tournantes est utilisé dans les applications aéronautiques « plus électriques ». Ce système de conditionnement d'air peut, en particulier, trouver des applications sur toutes les gammes d'avion, par exemple des avions d'affaires ou tout type d'avions commerciaux (monocouloir, régionaux, long range, ...).

Bien entendu, la présente invention ne se limite pas à la forme de réalisation préférée et aux variantes de réalisation présentées ci-dessus à titre d'exemples non limitatifs. Elle concerne également les variantes de réalisation à la portée de l'homme du métier dans le cadre des revendications ci-après.

## Revendications

1. Système de conditionnement d'air pour aéronef alimenté uniquement par énergie électrique, adapté pour prélever de l'air extérieur à l'aéronef et pour délivrer de l'air conditionné à l'intérieur de l'aéronef, comprenant au plus trois machines tournantes motorisées qui se composent de :
- un premier et un second turbocompresseurs motorisés (11, 12) indépendants l'un de l'autre, chaque turbocompresseur motorisé étant formé d'un compresseur (14, 15) générant un flux d'air à respirer à partir de l'air extérieur, d'une turbine (20, 21) et d'un moteur électrique (17, 18) ; et
- un moto-compresseur (13) interconnecté entre les turbocompresseurs motorisés (11, 12) via une conduite d'interconnexion et formé d'un compresseur (16) et d'un moteur électrique (19), la conduite d'interconnexion étant prévue pour relier les compresseurs (14, 15) des turbocompresseurs motorisés avec le compresseur (16) du moto-compresseur,
et dans lequel le moto-compresseur (13) est agencé pour :
- à partir de l'air extérieur prélevé, générer un flux d'air primaire, qui entraine un flux d'air secondaire prélevé de l'extérieur, permettant le refroidissement d'un flux d'air à respirer, prévu pour délivrer l'air conditionné, dans une première phase de fonctionnement, correspondant à une phase de fonctionnement au sol ou à relativement faible altitude et à relativement faible vitesse de l'aéronef ;
- être à l'arrêt ou au ralenti dans une deuxième phase de fonctionnement à relativement faible altitude et à relativement grande vitesse de l'aéronef ; et,
- fournir un complément de débit d'air à respirer dans une troisième phase de fonctionnement à relativement haute altitude et à relativement grande vitesse de l'aéronef, de sorte à compenser une plus faible densité de l'air extérieur prélevé.

2. Système de conditionnement d'air selon la revendication 1, dans lequel la conduite d'interconnexion est adaptée pour, dans la troisième phase de fonctionnement, compléter à parts sensiblement égales le débit de l'air compressé respectivement fourni par le compresseur (14, 15) de chaque turbocompresseur motorisé (11, 12), à partir de l'air compressé par le moto-compresseur (13).

3. Système de conditionnement d'air selon la revendication 1 ou la revendication 2, dans lequel la conduite d'interconnexion comprend au moins deux vannes d'isolement (42, 43) positionnées chacune entre le moto-compresseur (13) et l'un respectif des turbocompresseurs motorisés (11, 12), lesdites vannes d'isolement étant adaptées pour permettre l'équilibrage du système dans un mode de fonctionnement nominal et sa reconfiguration dans un mode de fonctionnement dégradé en cas de panne.

4. Système de conditionnement d'air selon l'une quelconque des revendications 1 à 3, comprenant en outre au moins un plénum (28) d'entrée adapté pour fournir de l'air extérieur aux compresseurs (14, 15, 16) des machines tournantes motorisées à partir d'au moins une entrée Ramair (29).

5. Système de conditionnement d'air selon l'une quelconque des revendications 1 à 4, comprenant :
- au moins un premier et un second organes déprimogènes (26, 27) associés chacun à l'un respectif des turbocompresseurs motorisés (11, 12) et comprenant chacun un dispositif d'injection d'air alimenté en air par le moto-compresseur (13) dans la première phase de fonctionnement ;
- au moins un premier et un second échangeurs de chaleur (22, 23), associés chacun à l'un respectif des turbocompresseurs motorisés (11, 12) et à l'un respectif des organes déprimogènes (26, 27), chaque échangeur de chaleur étant adapté pour refroidir l'air à respirer le traversant à l'aide du flux d'air secondaire généré par l'organe deprimogène associé.

6. Système de conditionnement d'air selon l'une quelconque des revendications 1 à 5, dans lequel chaque organe déprimogène (26, 27) est adapté pour ventiler le turbocompresseur motorisé (11, 12) respectif et dans lequel au moins l'un des organes déprimogènes (26, 27) est adapté pour, en outre, ventiler le moto-compresseur (13).

7. Système de conditionnement d'air selon la revendication 5 ou 6, comprenant en outre au moins quatre vannes de ventilation (38, 39, 40, 41) adaptées pour réguler la ventilation du système à travers les organes déprimogènes (26, 27), une première vanne de ventilation (40) étant positionnée pour réaliser une connexion entre le premier organe déprimogène (26) et le premier turbocompresseur motorisé (11), une deuxième vanne de ventilation (38) étant positionnée pour réaliser une connexion entre le premier organe déprimogène (26) et le moto-compresseur (13), une troisième vanne de ventilation (41) étant positionnée pour réaliser une connexion entre un second organe déprimogène (27) et le second turbocompresseur motorisé (12) et une quatrième vanne de ventilation (39) étant positionnée pour réaliser une connexion entre le second organe déprimogène (27) et le moto-compresseur (13).

8. Système de conditionnement d'air selon l'une quelconque des revendications 1 à 7, comprenant au moins un premier et un second dispositifs d'assèchement (24, 25) de l'air, chacun étant associé à l'un respectif des turbocompresseurs motorisés (11, 12) ainsi qu'à l'un respectif des échangeurs (22, 23).

9. Système de conditionnement d'air selon l'une quelconque des revendications 1 à 8, comprenant en outre au moins une première et une seconde vannes d'altitude (44, 45), chacune permettant de déconnecter l'un respectif des dispositifs d'assèchement (24, 25) ainsi que la turbine (20, 21) du turbocompresseur motorisé (11, 12) associée audit dispositif d'assèchement.

10. Système de conditionnement d'air selon l'une quelconque des revendications 1 à 9, dans lequel l'alimentation électrique est fournie par un réseau d'alimentation électrique comportant un canal d'alimentation électrique pour chaque machine tournante motorisée.

## Patentansprüche

1. Klimaanlage für ein einzig durch elektrische Energie gespeistes Luftfahrzeug, die dafür eingerichtet ist, Luft von außerhalb des Luftfahrzeugs zu entnehmen und klimatisierte Luft in das Innere des Luftfahrzeugs zu liefern, umfassend höchstens drei motorisierte drehende Maschinen, die sich aus Folgendem zusammensetzen:
- einem ersten und einem zweiten motorisierten Turbokompressor (11, 12), die unabhängig voneinander sind, wobei jeder motorisierte Turbokompressor aus einem Kompressor (14, 15), der ausgehend von der Außenluft einen Atemluftstrom erzeugt, einer Turbine (20, 21) und einem Elektromotor (17, 18) gebildet ist; und
- einem Motorkompressor (13), der über eine Verbindungsleitung zwischen die motorisierten Turbokompressoren (11, 12) geschaltet ist und aus einem Kompressor (16) und einem Elektromotor (19) gebildet ist, wobei die Verbindungsleitung dafür vorgesehen ist, die Kompressoren (14, 15) der motorisierten Turbokompressoren mit dem Kompressor (16) des Motorkompressors zu verbinden,
und wobei der Motorkompressor (13) dafür beschaffen ist:
- ausgehend von der entnommenen Außenluft einen Primärluftstrom zu erzeugen, der einen von außen entnommenen Sekundärluftstrom mitführt, der die Kühlung eines Atemluftstroms ermöglicht, der vorgesehen ist, um in einer ersten Betriebsphase, die einer Phase des Betriebs am Boden oder in relativ geringer Höhe und mit relativ geringer Geschwindigkeit des Luftfahrzeugs entspricht, klimatisierte Luft zu liefern;
- in einer zweiten Betriebsphase in relativ geringer Höhe und mit relativ hoher Geschwindigkeit des Luftfahrzeugs im Stillstand oder verlangsamt zu sein; und
- in einer dritten Betriebsphase in relativ großer Höhe und mit relativ hoher Geschwindigkeit des Luftfahrzeugs einen ergänzenden Luftdurchsatz zu liefern, um eine geringere Dichte der entnommenen Außenluft zu kompensieren.

2. Klimaanlage nach Anspruch 1, wobei die Verbindungsleitung dafür geeignet ist, in der dritten Betriebsphase den Durchsatz an verdichteter Luft, der jeweils von dem Kompressor (14, 15) jedes motorisierten Turbokompressors (11, 12) geliefert wird, auf Basis der von dem Motorkompressor (13) verdichteten Luft zu im Wesentlichen gleichen Teilen zu ergänzen.

3. Klimaanlage nach Anspruch 1 oder Anspruch 2, wobei die Verbindungsleitung wenigstens zwei Isolierventile (42, 43) umfasst, die jeweils zwischen dem Motorkompressor (13) und einem jeweiligen der motorisierten Turbokompressoren (11, 12) angeordnet sind, wobei die Isolierventile dafür eingerichtet sind, ein Gleichgewicht des Systems in einem Nennbetriebsmodus und seine Rekonfiguration in einem Notbetriebsmodus im Fall einer Panne zu ermöglichen.

4. Klimaanlage nach einem der Ansprüche 1 bis 3, umfassend ferner wenigstens ein Einlassplenum (28), das dafür eingerichtet ist, ausgehend von wenigstens einem Ram-Air-Einlass (29) Außenluft an die Kompressoren (14, 15, 16) der motorisierten drehenden Maschinen bereitzustellen.

5. Klimaanlage nach einem der Ansprüche 1 bis 4, umfassend:
- wenigstens ein erstes und ein zweites Unterdruckorgan (26, 27), die jeweils einem jeweiligen der motorisierten Turbokompressoren (11, 12) zugeordnet sind und jeweils eine Lufteinspritzvorrichtung umfassen, die in der ersten Betriebsphase durch den Motorkompressor (13) mit Luft gespeist wird;
- wenigstens einen ersten und einen zweiten Wärmetauscher (22, 23), die jeweils einem jeweiligen der motorisierten Turbokompressoren (11, 12) und einem jeweiligen der Unterdruckorgane (26, 27) zugeordnet sind, wobei jeder Wärmetauscher dafür eingerichtet ist, die ihn durchströmende Atemluft mithilfe des sekundären Luftstroms zu kühlen, der durch das zugeordnete Unterdruckorgan erzeugt wird.

6. Klimaanlage nach einem der Ansprüche 1 bis 5, wobei jedes Unterdruckorgan (26, 27) dafür eingerichtet ist, den jeweiligen motorisierten Turbokompressor (11, 12) zu lüften und wobei wenigstens eines der Unterdruckorgane (26, 27) dafür eingerichtet ist, ferner den Motorkompressor (13) zu lüften.

7. Klimaanlage nach Anspruch 5 oder 6, ferner umfassend wenigstens vier Lüftungsventile (38, 39, 40, 41), die dafür eingerichtet sind, die Lüftung des Systems durch die Unterdruckorgane (26, 27) zu regulieren, wobei ein erstes Lüftungsventil (40) angeordnet ist, um eine Verbindung zwischen dem ersten Unterdruckorgan (26) und dem ersten motorisierten Turbokompressor (11) herzustellen, ein zweites Lüftungsventil (38) angeordnet ist, um eine Verbindung zwischen dem ersten Unterdruckorgan (26) und dem Motorkompressor (13) herzustellen, ein drittes Lüftungsventil (41) angeordnet ist, um eine Verbindung zwischen einem zweiten Unterdruckorgan (27) und dem zweiten motorisierten Turbokompressor (12) herzustellen, und ein viertes Lüftungsventil (39) angeordnet ist, um eine Verbindung zwischen dem zweiten Unterdruckorgan (27) und dem Motorkompressor (13) herzustellen.

8. Klimaanlage nach einem der Ansprüche 1 bis 7, umfassend wenigstens eine erste und eine zweite Lufttrocknungsvorrichtung (24, 25), die jeweils einem jeweiligen der motorisierten Turbokompressoren (11, 12) sowie einem jeweiligen der Tauscher (22, 23) zugeordnet sind.

9. Klimaanlage nach einem der Ansprüche 1 bis 8, ferner umfassend wenigstens ein erstes und ein zweites Höhenventil (44, 45), die es jeweils ermöglichen, eine jeweilige der Trocknungsvorrichtungen (24, 25) sowie die der Trocknungsvorrichtung zugeordnete Turbine (20, 21) des motorisierten Turbokompressors (11, 12) zu trennen.

10. Klimaanlage nach einem der Ansprüche 1 bis 9, wobei die Stromversorgung durch ein Stromversorgungsnetz bereitgestellt wird, das einen Stromversorgungskanal für jede motorisierte drehende Maschine aufweist.

## Claims

1. Air conditioning system for an aircraft powered solely using electrical energy, intended to draw air in from outside the aircraft and deliver conditioned air to the interior of the aircraft, comprising at most three motorized rotary machines which are comprised of:
- a first and a second motorized turbocompressor (11, 12) which are independent of one another, each motorized turbocompressor being formed of a compressor (14, 15) generating a flow of air for breathing from the outside air, of a turbine (20, 21) and of an electric motor (17, 18); and
- a motor compressor (13) interconnected between the motorized turbocompressors (11, 12) via an interconnection pipe and formed of a compressor (16) and of an electric motor (19), the interconnection pipe being provided to connect the compressors (14, 15) of the motorized turbocompressors with the compressor (16) of the motor compressor,
and in which the motor compressor (13) is designed to:
- from air drawn in from outside, generate a primary air flow, which drives a secondary air flow drawn from the outside, allowing for the cooling of a flow of air for breathing, provided to deliver conditioned air, in a first phase of operation, corresponding to a phase of operation on the ground or at a relatively low altitude and at a relatively low aircraft speed;
- be shut down or at low idle in a second phase of operation at a relatively low altitude and at a relatively high aircraft speed; and,
- provide a top up of a flow of air for breathing in a third phase of operation at a relatively high altitude and at a relatively high aircraft speed, in such a way as to compensate a lower density of the air drawn in from outside.

2. Air conditioning system according to claim 1, wherein the interconnection pipe is suitable for, in the third phase of operation, top up in substantially equal portions the flow of compressed air respectively supplied by the compressor (14, 15) of each motorized turbocompressor (11, 12), from the air compressed by the motor compressor (13).

3. Air conditioning system according to claim 1 or claim 2, wherein the interconnection pipe comprises at least two isolation valves (42, 43) each positioned between the motor compressor (13) and one respective of the motorized turbocompressors (11, 12), said isolation valves being adapted to allow for the balancing of the system in a nominal operating mode and its reconfiguration in a degraded operating mode in case of a breakdown.

4. Air conditioning system according to any of claims 1 to 3, further comprising at least one intake plenum (28) adapted to supply outside air to the compressors (14, 15, 16) of the motorized rotary machines from at least one Ramair inlet (29).

5. Air conditioning system according to any of claims 1 to 4, comprising:
- at least one first and one second orifice plate members (26, 27) each associated with one respective of the motorized turbocompressors (11, 12) and each comprising an air injection device supplied with air by the motor compressor (13) in the first phase of operation;
- at least one first and one second heat exchangers (22, 23), each associated with one respective of the motorized turbocompressors (11, 12) and with one respective of the orifice plate members (26, 27), with each heat exchanger being adapted to cool the air for breathing passing through it using the secondary air flow generated by the associated orifice plate member.

6. Air conditioning system according to any of claims 1 to 5, wherein each orifice plate member (26, 27) is adapted to ventilate the respective motorized turbocompressor (11, 12) and wherein at least one of the orifice plate members (26, 27) is adapted to, furthermore, ventilate the motor compressor (13).

7. Air conditioning system according to claim 5 or 6, further comprising at least four ventilation valves (38, 39, 40, 41) adapted to adjust the ventilation of the system through the orifice plate members (26, 27), a first ventilation valve (40) being positioned in order to create a connection between the first orifice plate member (26) and the first motorized turbocompressor (11), a second ventilation valve (38) being positioned in order to create a connection between the first orifice plate member (26) and the motor compressor (13), a third ventilation valve (41) being positioned in order to create a connection between a second orifice plate member (27) and the second motorized turbocompressor (12) and a fourth ventilation valve (39) being positioned in order to create a connection between the second orifice plate member (27) and the motor compressor (13).

8. Air conditioning system according to any of claims 1 to 7, comprising at least one first and one second devices for drying (24, 25) air, with each one being associated with one respective of the motorized turbocompressors (11, 12) as well as to one respective of the exchangers (22,23).

9. Air conditioning system according to any of claims 1 to 8, further comprising at least one first and one second altitude valves (44, 45), each one making it possible to disconnect one respective of the devices for drying (24, 25) as well as the turbine (20, 21) of the motorized turbocompressor (11, 12) associated with said device for drying.

10. Air conditioning system according to any of claims 1 to 9, wherein the electrical power supply is supplied by an electrical power supply network comprising an electrical power supply channel for each motorized rotary machine.
